# EUROPEAN PATENT APPLICATION

(11) **EP 4 145 438 A1**
(43) Date of publication of application: **08.03.2023**
(21) Application number: 22191377.5
(22) Date of filing: 22.08.2022
(51) Int. Cl.: G10G 1/00, G06F 3/048, G10H 1/40, G10H 1/00

(54) **AUTOMATIC MUSIC DOCUMENT DISPLAYING ON PERFORMING MUSIC**

(30) Priority: 01.09.2021 FI 20215911
(71) Applicant: Yousician Oy, 00530 Helsinki (FI)
(72) Inventor: HIIPAKKA, Jarmo, 00530 Helsinki (FI); THÜR, Christoph, 00530 Helsinki (FI)
(74) Representative: Espatent Oy

(57) **Abstract**

A user interface presents structural musical information in a score in a way where both the start and the end points of each jump in the score are visible simultaneously. Each jump is presented in a manner that allows the user to select during performance, which one of different alternatives to choose, when approaching a decision point like a repeat in the song.

## Description

### TECHNICAL FIELD

The present disclosure generally relates to automatic music document displaying on performing music.

### BACKGROUND

This section illustrates useful background information without admission of any technique described herein representative of the state of the art.

Currently, an increasing number of both professional and amateur musicians use electronic devices for displaying musical information such as sheet music or chord charts & lyrics for performance and practice, instead of using printed-out paper copies. There are many applications for presenting music like this on different devices and operating systems.

A common problem with electronic presentation of sheet music is the small size of the display. Even fairly simple musical works seldom fit on a single page when printed. Displaying such pieces on electronic displays can often be done only one page or less at a time. This results in additional "page turns", when such a piece is played from a device like the Apple iPad^{™}. Simultaneously, songs and other works often repeat certain sections of music multiple times. These are often represented as repeats and endings, as well as da capo, dal segno and coda symbols. All these structural symbols result in jumps inside the music, and on the page(s). With a small display, the start and end points of such jumps are much less likely to be simultaneously visible than when playing the same piece of music using regular printouts, because the musician cannot simply lay multiple sheets of paper side-by-side on a music stand.

When sheet music laid out to be printed out is presented electronically without significant changes to the layout, jumps forward and backward cause usability issues to the musician. When the start and end points of a jump do not fit simultaneously on the display, it is difficult for the user to know how many pages to turn, or how far to scroll in the presentation. Additionally, the user has to be able to time the page turn accurately to avoid remembering extensive parts of the music by heart. To alleviate these issues, some applications allow the user to create links in the score that take the user from the start point of the jump to the end point with a single tap.

Music itself is a linear format in time. Traditional sheet music utilizes the natural repetition in music and the different structural symbols to enable presenting music more concisely. This helps to communicate the structure and is more practical by reducing pages. For digital presentation, the number of pages is not quite as impractical: since there is no need to save paper and ink, repetitions and other jumps can be entirely avoided by "unrolling" all jumps and linearly presenting the whole piece. This works well, when the piece is always performed as written, but it is not uncommon to make changes to the structure while performing, or especially during rehearsal (e.g., play chorus one more time). In these cases, a fully unrolled presentation may be suboptimal. Some existing solutions allow the user to edit the score such that pages are in a linear order as desired for performance.

Almost all instruments require the use of both hands for playing. Therefore, one of the main issues with using electronic devices while playing is operating the device. Simple taps on the display or key presses on a keyboard can sometimes be used, but more complex interactions, such as accurate swipes should be discouraged in design. It would be desirable to enable hands-free operation of the device or application while playing. A simple way to automate the presentation would be to time the necessary transitions beforehand to match the musical durations. This method allows little variation while performing, and in practice is only suitable, when timing and tempo can be guaranteed to stay the same between rehearsals and performances (such as when using a backing track). Another simple hands-free method is to use a controller like a page-turner pedal board to go backward and forward in the score while playing.

There are also more sophisticated methods for knowing, what the user is playing, relative to the information in the score. Using audio signal processing and machine learning techniques, it is possible to develop musical score alignment systems. This kind of systems try to match the symbolic musical information in the score to an audio signal. Systems that can do this in real-time, would be able to adjust the display of the score to what the musician is playing. However, such systems may require the performance to match the score almost note-for-note, which is quite sub-optimal for this purpose.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a computer implemented method comprising
maintaining a music document indicating what should be performed in a piece of music; and repeatedly:
displaying on a display in a main view a first part of the music document when a user performs the piece of music;
identifying a source portion of the music document that is being performed by the user;
identifying in the musical document a plurality of potential jump targets including at least any positions that are structurally associated with the source portion;
displaying on the display one or more of the potential jump targets in respective one or more target views together with the main view;
identifying a destination portion of the musical document for performing after the source portion; and
updating the main view to display a second part of the musical document at the destination portion.

By updating the main view to display the second part of the musical document at the destination portion, the main view may be made to display another portion of the musical document.

By updating the main view to display a second part of the musical document at the destination portion, the user may be allowed to continue performing with little or no manual interaction with a computer system that performs the method.

The method may further comprise identifying the source portion as the first part of the music document. Alternatively, the method may further comprise identifying the source portion as a sub-part of the first part.

The destination portion may correspond to one of the target views. Alternatively, the destination portion may not correspond to any one of the target views.

The identifying of the destination portion may comprise receiving a user indication of a chosen jump target. The user indication may be received using one or more keys or buttons. The user indication may be received using a touch screen. The user indication may be received using a gaze detector configured to identify the chosen jump target based on the gaze of the user and the order of the main view and the target views on the display. The user indication may be determined from an audio signal produced by the user by detecting which part of the piece of music the user is performing.

By identifying the chosen jump target by the gaze or audio signal produced by the user, the user need not move her hands or feet to control the scrolling or otherwise moving of the music document for presenting relevant portion of the music document as desired by the user.

The music document may comprise music sheets having lines and notes marked therein. The method may comprise adapting the music sheets by removing staves not needed for performing by the user.

The music document may comprise chords or chord charts.

The music document may comprise lyrics.

The identifying of the destination portion may further comprise detecting which part of the piece of music the user is performing. The detecting of which part of the piece of music the user is performing may comprise recognizing what the user is singing, using lyrics of the musical document.

The identifying of the destination portion may further comprise using speech recognition and determining verbal indication of the destination portion.

The determining of the user indication from the audio signal produced by the user may employ symbolic information of the music document. The symbolic information may describe the piece of music. The symbolic information may comprise an indication of notes or chords. The symbolic information may comprise an indication of rhythm.

The method may further comprise adding supplementary symbolic information to the music document allowing the user to indicate the destination portion by performing accordingly.

The symbolic information may comprise an indication of notes or chords, and / or an indication of rhythm.

The method may further comprise identifying in the musical document a plurality of structurally associated jump sources and jump targets.

The method may further comprise identifying one or more of the structurally associated jump sources in the source portion, and responsively identifying and displaying in respective target views one or more associated jump targets.

The identifying of the destination portion may further comprise receiving a user indication of the destination portion from another person. The other person may be a leader of a band or orchestra. The other person may be another performer. The identifying of the destination portion may comprise receiving a plurality of indications. The destination portion may be probabilistically determined as the one that is most likely based on the plurality of indications. Some of the plurality of indications may be hierarchically prioritized. The prioritizing may weigh more indications that are more reliable over indications that are less reliable. The determination of reliability may be predetermined. The determination of reliability may be assessed on forming one or more of the plurality of indications.

By receiving user indications from more two or more persons, probabilistic enhancement may be applied such that otherwise less reliable methods can be employed with enhanced reliability. Some of the plurality of indications may be hierarchically prioritized. The prioritizing may comprise weighing more indications that are more reliable over indications that are less reliable. The indications received from given one or more persons may be prioritized over those of other persons.

The determination of reliability optionally may be predetermined or assessed on forming one or more of the plurality of indications.

The method may further comprise displaying the main view and the target views in an order corresponding to that of an original musical document.

By displaying the respective one or more target views together with the main view so that the main view and the one or more target views are ordered by progression in the piece of music, the user may be provided with an intuitive view into present part of the music document and into the one or more target views in their logical order.

The displaying of the main view and the one or more target views may comprise user perceivably indicating discontinuations of displayed parts of the music document. The user perceivably indicating may comprise displaying a border. The displaying of the main view and the one or more target views may comprise displaying some parts of the music document in different colors. The displaying of the main view and the one or more target views may comprise displaying some parts of the music document in different shades.

The user perceivably indicating discontinuations of displayed parts of the music document may make the view even more intuitive by helping the user to distinguish the target views and the main view.

The displaying of the main view and the one or more target views may comprise adjusting the main view. The adjusting of main view may comprise shrinking the main view in the direction of a potential jump target to free display area. The method may further comprise adding the respective target view using the freed display area. The shrinking of the main view may be performed gradually to free display area by degree. The adding the respective target view may be performed gradually using the freed display area.

The display may comprise a display area. The display area may be vertically divided into the main view and the one or more target views. Display area of the display may be vertically divided into the main view and the one or more target views so that at least one stave system height is provided for each of the main view and the one or more target views.

The method may further comprise scrolling of the music document in the main view on performing the piece of music. The scrolling may be performed line by line. The scrolling may be performed by a number of lines. The scrolling may be performed page by page.

The scrolling of the music document in the main view to the chosen jump target and closing the target views may comprise expanding the target view of the chosen jump target to the main view.

The method may further comprise unrolling the music document to contain fewer jumps when performed according to the music document. The unrolling of the music document may yet increase possible jumps, if the user desires to deviate from the order defined by the music document. The method may comprise presenting a limited number of potential target views.

US 17/211958 that is incorporated by reference discloses some ways to perform the identifying the source portion. Alternatively, the source portion may be identified to be the first part of the music document that is displayed in the main view. The source portion may be estimated within the first part of the music document based on display time that is a duration for which the main view has been presented since previous updating. The source portion may be estimated within the first part of the music document based on a tempo defined by the music document.

According to a second example aspect there is provided a user interface that presents structural musical information in a score in a way where both the start and the end points of each jump in the score are visible simultaneously, and each jump is presented in a manner that allows the user to select during performance, which one of different alternatives to choose, when approaching a decision point like a repeat in the song.

The user interface may comprise views of at least two kinds:
- Main view: The primary area of the proposed user interface that shows the part of the music the user is currently performing by playing or singing.
- Target view: An auxiliary area of the user interface that shows the end point of a jump in score, where the start point of the jump is currently visible in the main view. A target view may be shown and hidden contextually based on where the user is in the score and can be activated (selected) by the user to navigate the main view to the corresponding part.

According to a third example aspect there is provided an apparatus comprising
a memory for maintaining a music document indicating what should be performed in a piece of music;
a display; and
at least one processor configured to repeatedly cause:
   displaying on the display in a main view a first part of the music document when a user performs the piece of music;
   identifying a source portion of the music document that is being performed by the user;
   identifying in the musical document a plurality of potential jump targets including at least any positions that are structurally associated with the source portion;
   displaying on the display one or more of the potential jump targets in respective one or more target views together with the main view;
   identifying a destination portion of the musical document for performing after the source portion; and
   updating the main view to display a second part of the musical document at the destination portion.

According to a fourth example aspect there is provided a computer program comprising computer executable program code which when executed by at least one processor causes an apparatus at least to perform the method of the first or second example aspect.

According to a fifth example aspect there is provided a computer program product comprising a non-transitory computer readable medium having the computer program of the third example aspect stored thereon.

According to a sixth example aspect there is provided an apparatus comprising means for performing the method of any preceding aspect.

Any foregoing memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 schematically shows an apparatus according to an example embodiment;
Fig. 2 shows a block diagram of an apparatus according to an example embodiment; and
Fig. 3 shows an example screen shot with notes and lyrics masked;
Fig. 4 shows an example screen shot with notes and lyrics masked;
Fig. 5 shows an example screen shot with notes and lyrics masked; and
Figs. 6a to 6d show a flow chart of a process of an example embodiment.

### DETAILED DESCRIPTION

In the following description, like reference signs denote like elements or steps.

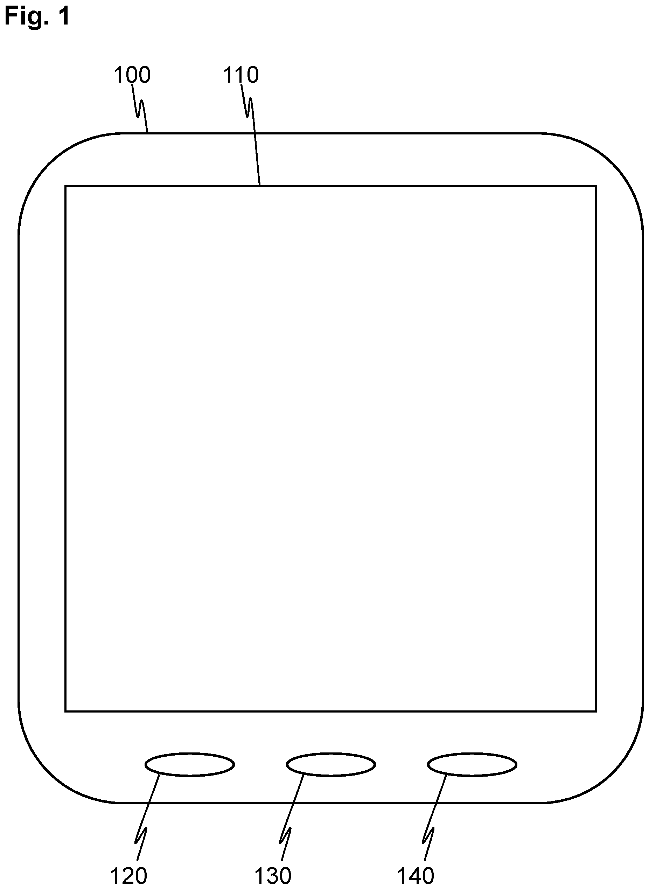

Fig. 1 schematically shows an apparatus 100 of an example embodiment. The apparatus 100 has a user interface comprising a display 110 and some soft or hard keys 120, 130, 140. The display may be a touch display.

In an embodiment, the user interface presents structural musical information in a score in a way where both the start and the end points of each jump in the score are visible simultaneously, and each jump is presented in a manner that allows the user to select during performance, which of the alternatives to choose, when approaching a decision point like a repeat in the song.

The display can be seen to comprise two different kinds of views:
- Main view: The primary area of the proposed user interface that shows the part of the music the user is currently performing.
- Target view(s): An auxiliary area of the user interface that shows the end point of a jump in score, where the start point of the jump is currently visible in the main view. In an example embodiment, the target view is shown and hidden contextually based on where the user is in the score and can be activated for the user to navigate the main view to the corresponding part.

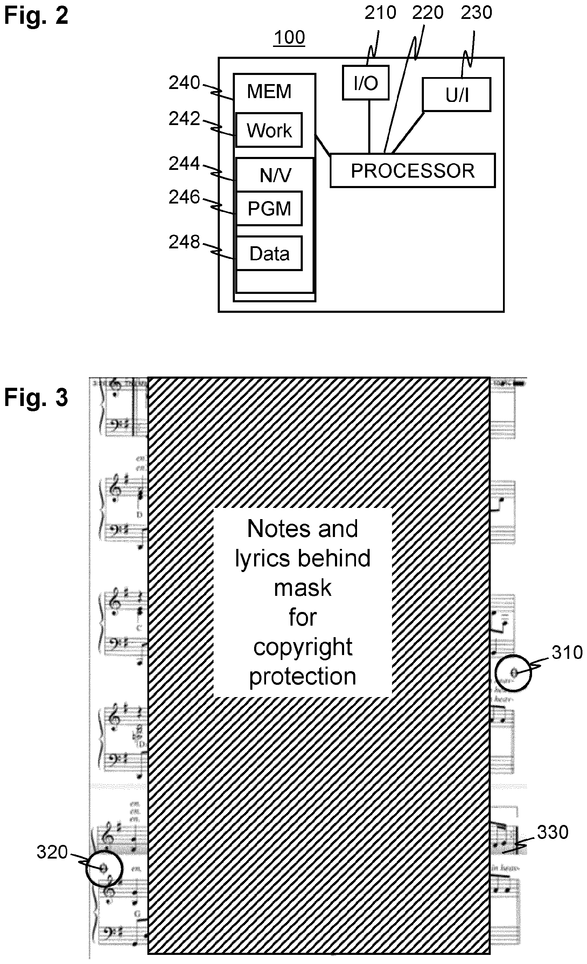

Fig. 2 shows a block diagram of an apparatus 100 according to an example embodiment. The apparatus 100 comprises a communication interface 210; a processor 220; a user interface 230; and a memory 240.

The communication interface 210 comprises in an embodiment a wired and/or wireless communication circuitry, such as Ethernet; Wireless LAN; Bluetooth; GSM; CDMA; WCDMA; LTE; and/or 5G circuitry. The communication interface can be integrated in the apparatus 100 or provided as a part of an adapter, card, or the like, that is attachable to the apparatus 100. The communication interface 210 may support one or more different communication technologies. The apparatus 100 may also or alternatively comprise more than one of the communication interfaces 210.

In this document, a processor may refer to a central processing unit (CPU); a microprocessor; a digital signal processor (DSP); a graphics processing unit; an application specific integrated circuit (ASIC); a field programmable gate array; a microcontroller; or a combination of such elements.

The user interface may comprise a circuitry for receiving input from a user of the apparatus 100, e.g., via a keyboard; graphical user interface shown on the display of the apparatus 100; speech recognition circuitry; or an accessory device; such as a headset; and for providing output to the user via, e.g., a graphical user interface or a loudspeaker.

The memory 240 comprises a work memory 242 and a persistent memory 244 configured to store computer program code 246 and data 248. The memory 240 may comprise any one or more of: a read-only memory (ROM); a programmable read-only memory (PROM); an erasable programmable read-only memory (EPROM); a random-access memory (RAM); a flash memory; a data disk; an optical storage; a magnetic storage; a smart card; a solid-state drive (SSD); or the like. The apparatus 100 may comprise a plurality of the memories 240. The memory 240 may be constructed as a part of the apparatus 100 or as an attachment to be inserted into a slot; port; or the like of the apparatus 100 by a user or by another person or by a robot. The memory 240 may serve the sole purpose of storing data or be constructed as a part of an apparatus 100 serving other purposes, such as processing data.

A skilled person appreciates that in addition to the elements shown in Figure 2, the apparatus 100 may comprise other elements, such as microphones; displays; as well as additional circuitry such as input/output (I/O) circuitry; memory chips; application-specific integrated circuits (ASIC); processing circuitry for specific purposes such as source coding/decoding circuitry; channel coding/decoding circuitry; ciphering/deciphering circuitry; and the like. Additionally, the apparatus 100 may comprise a disposable or rechargeable battery (not shown) for powering the apparatus 100 if external power supply is not available.

Fig. 3 shows a screen shot of an example embodiment. Here, the display 110 is divided into two parts. A top part is showing the main view, which takes up the largest amount of space on display and displays the section of the music the user is currently performing. When a coda marking 310 (highlighted above a fourth system of staves) is visible in the main view, or the apparatus 100 otherwise knows the user is approaching this potential jump start point, the apparatus 100 shows a corresponding jump target point 320 of the jump in a target view at the bottom of the display. The target view is indicated to be perceivably discontinuous or separated from the main view in this case by a line and a shadow effect 330 on bottom of the main view.

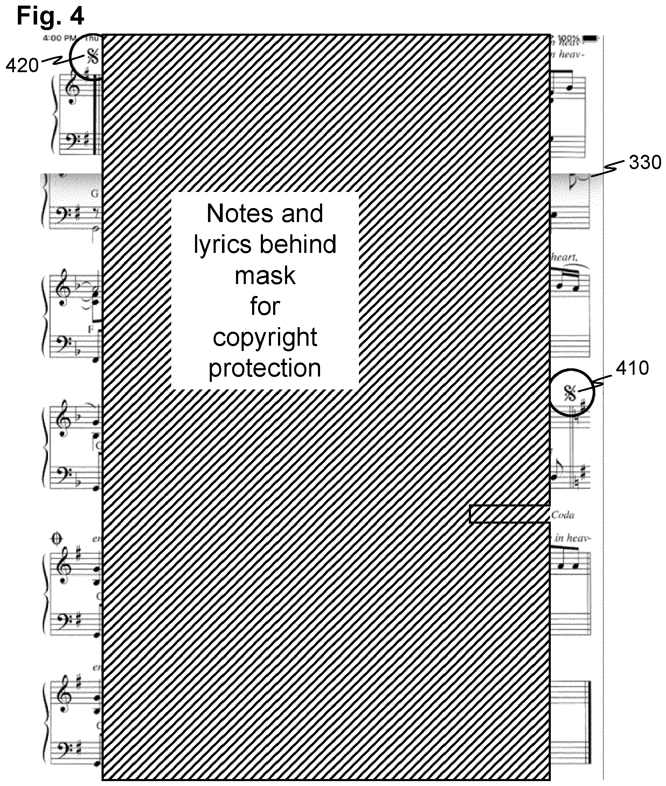

Figure 4 shows a similar case, but with jump from the D.S. con rep. al coda marking 410 to a beginning 420 of the verse that has a similar marking. In this case, the target view is shown at the top of the display, again separated by a line and a shadow 330 from the main view. For a jump backward in the original score, it may be advantageous to present the target view at the top of the page, whereas a jump forward may be better presented at the bottom. In other words, the main view and the target view(s) may be ordered by progression of the piece of music, although this need not necessarily be the case. Generally speaking, any of the location, size, scaling, and / or shape of the target view are not essential to the present invention, rather these may be set specifically to each implementation and / or context.

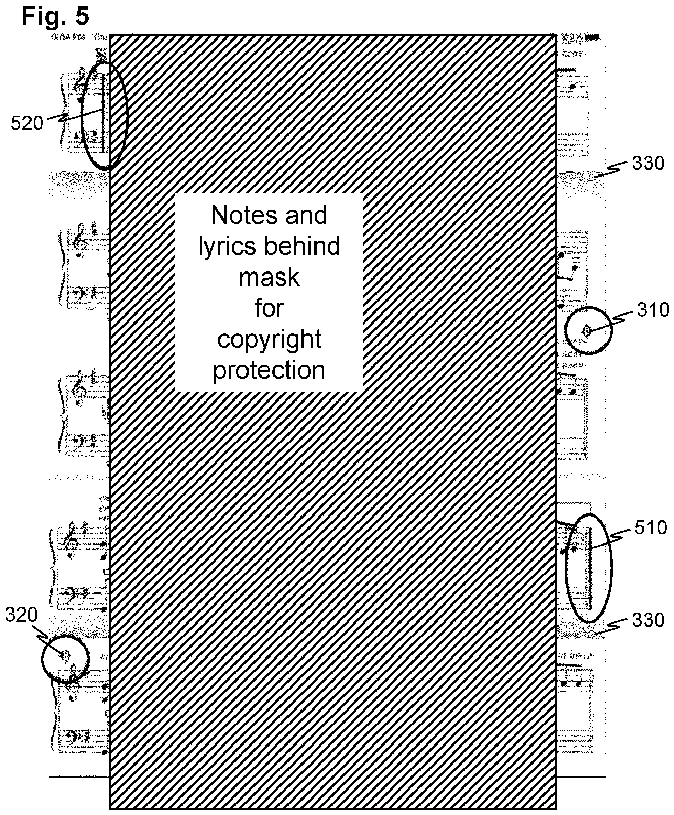

Simultaneously visible target views need not to be limited to one. Fig. 5 shows an example screenshot with two different target views: one at the top and another one at the bottom of the display. When there are multiple jump start points visible in the main view, there can also be multiple different target views visible. Again, the number, positions, and other parameters of the target views in Fig. 5 are presented purely for illustration of an example and not intended for limitation of this invention.

There are also many different alternatives to the presentation of the main view. The main view can be a continuously scrolling view, like the one depicted in Fig. 5, or a page-based presentation of Fig 4, for example. The scaling and size of the main view can also depend on the application and context. For example, it is possible to reduce the size and/or scaling of the main view, while one or more target views are visible. It is also possible to that two or more target views reside on one side of the main view in terms of the normal progression of music in the piece of music. In such a case, the target views may lead or trail the main view in an order such that the user can easily perceive how to target views relate to the main view with relation to the piece of music.

In an example embodiment, the user can select to jump to the target view. In the simplest implementations, selecting the jump is a manual action by the user. The selection action could be based on, e.g., the user tapping on a touch screen, selecting from a keyboard, or using a suitable remote-control device. There are also more automated approaches discussed in the following.

The target view serves a purpose of the user being able to follow the music through the transition, because they can see all the necessary information in the main and target view before and after proceeding to the jump target. In an example embodiment, when the user selects the jump, a transition to the target view is provided in a way that expands the target view visually to ensure continuity. The target view may expand to cover the whole display 110, so becoming, or merging with, the main view.

While it is possible to base visibility of the target view(s) purely on the structural elements visible on the display 110, it is advantageous to estimate, where the user is in the song. In the situation of Fig. 3, it is not necessary to display a jump target (coda target view before the user is approaching the jump origin 310 (al coda mark), e.g., when the user starts performing the fourth system (line) of the score. Similarly, in case of Fig. 5, the bottom and top target views only need to be shown, when the user is in on the second or the third system of the main view, respectively. This helps declutter the combination of different views.

Additionally, the contents of the main view can be made to reflect the current position in score, e.g., by scrolling the current position approximately to the center of the display 110. It is also possible to move a position pointer about the score while the user is performing and perform the scrolling in larger chunks. Moreover, in an embodiment, the music document is manually moved in the main view and the current position is known to be somewhere within the main view. In a further embodiment, the current position within the main view is estimated.

In a simple case, the source portion in the score is estimated simply based on the time it would take to perform each system of the score. In the case of Figure 3, performing the first three visible systems with a typical tempo would take about 36 seconds. If we know, when the user started from the repeat mark on top the display 110, the coda target view could be shown only after that time. For this automation to be useful, it does not need to be particularly accurate, as performing each line in a typical score can take several seconds. For enhanced performance, however, the user may be allowed to change the timings either directly, or through a tempo setting or similar.

As pointed out in the background section, matching performing to the position in score can also be based on more sophisticated methods, such as analyzing the audio signal. For displaying the target views, even a fairly coarse position estimate may be useful.

Alternatively, estimating the position in the score can be based on, e.g., using a gaze-tracking (eye-tracking) device to determine where the user is looking at in the score. The accuracy of many eye-tracking systems suffices for this application. Such systems are also increasingly more common in regular mobile devices. Also, a combination of different methods for the estimate can be used.

Both the audio analysis and the gaze-tracking method of position estimation can also be used to signal user selection to the apparatus 100. In the case of an audio signal analysis system, the different paths through the song will differ at some point after the jump possibility, and the analysis system could maintain two or more hypotheses, and determine the user selection, once there is a significant difference in the likelihood of these options. For instance, in Fig. 5, the al coda mark creates two potential continuations, represented by the last line in the main view, and the line visible in the lower target view. These continuations start differing slightly in the second bar, and more significantly in the third bar, at which point the apparatus 100 can determine, whether the user selected coda instead of continuing in the verse. In case of a gaze-tracking device, user selection can be confirmed as soon as the apparatus 100 has reliably detected where user continues to focus on the display 110. A time-based position estimate would only be able to signify the target view selection in the case, where the jump is the only way forward in the music. For example, in Fig. 4, the only way forward from segno is to the top of the display 110; coda does not make sense as a continuation. That said, in some occasions the user may wish to repeat some part in deviation of the normal continuation or progression in the piece of music.

In an example embodiment, the apparatus 100 is provided with structural information about the current score to be presented. In an example embodiment, the apparatus 100 is based on processing musical data purely in symbolic form so that the apparatus can render that information in the user interface as required. This approach can produce very flexible results, as many parameters of presentation can be easily controlled to fit the current context. In another example embodiment, the apparatus 100 is based on a purely visual representation of the score (such as a digital image), with just enough auxiliary information to make the apparatus 100 functional.

The minimum information that is needed for this user interface to function as required by one example embodiment are the locations and relationships of start and end points for backward and forward jumps in the score. This allows basic target views to be created and shown when the corresponding start point or jump origin is visible in the main view. For better visual results, the apparatus 100 may have further information about at least the height of each line in score, such that each target view can be more appropriately sized and scaled. A gaze-tracked version of the interface will particularly benefit from understanding the locations and sizes of all displayed score lines. This information, combined with the direction of the user's gaze, allows gaze tracking the performing (focus) position in the score. An implementation based on analyzing audio signals, and updating the interface based on it, can be operated on more symbolic information about the music itself (e.g., notes, chords, transposition), and how they would be represented in the audio signal.

If the display 110 of the visual score is not based on symbolic information alone, any visual representation may be augmented with necessary symbolic information. This information is attached in an example embodiment to the visual representation by the end-user herself through either the apparatus 100 or with some other equipment, optionally using a same application that is used to provide automatic scrolling in the music document. In an example embodiment, this work may be performed by someone else and, for example, stored on a server, and delivered to the user through a network service. In an example embodiment, an image recognition system is used to automatically analyze the visual representation, recognize necessary symbols from it, and to augment the visual representation with necessary symbolic data. Such a recognition system may be implemented either locally (in the same device) or (in part) as a remote service through a network. Irrespective of how the symbolic information is first created, the apparatus 100 can be arranged to allow the user to edit any and all information user for constructing the interface.

It shall also be appreciated that the apparatus 100 need not perform all processing locally. The apparatus 100 may operate as a (dumb) terminal only acting as a man-machine interface, while processing is performed partially or entirely in a remote location, possibly in a computer cloud.

Various embodiments may further function well with regular scores designed for traditional print-out format. The symbolic structural information needed for the interface may also allow the apparatus 100 to unroll the score either automatically or by the user. Unrolling can help make jumps in score less frequently used (the score would typically be performed in the predetermined order), but can, on the other hand increase the number of jump possibilities, for example, if the song has many verses. If this is in some cases the preferred presentation, it may be necessary for the apparatus 100 to limit the number of target view options simultaneously available in the interface.

While the discussion and the examples above mostly relate to regular western musical notation, it is possible to apply the same techniques to other visual representations of musical information. The score could consist of, e.g., only lyrics and chords, or be a tablature for stringed instruments. This apparatus 100 is also most useful in cases, where the score can fit multiple lines in the main view of the interface. For example, full orchestral scores may have very large systems of staves, which does not easily lend itself to this presentation. The example presentations could still be adapted for such use cases by scaling, shaping, partial presentations in the main view or target views, and other modifications.

Some embodiments allow for compact, flexible presentation and usage of musical information on electronic devices with limited display space. With the presented user interface, users may easily and flexibly jump to different parts of the musical score, without losing sight of the notation itself both before and after the jump. When the presentation is augmented with automation techniques such as audio signal analysis or gaze-tracking, the user may maintain musical flexibility and achieve mostly or entirely hands-free operation.

In this document, a staff (br. stave) may refer to a notation including five parallel horizontal lines that, with a clef, indicate the pitch of musical notes.

A system of staves may refer to a collection of staves connected vertically to be performed simultaneously (e.g., piano left and right hands).

A Line (in score) may refer to an individual staff or a system of staves that can be used as a basis for structural navigation in the score. In case music is presented as a lyrics-and-chords representation, a line may refer to a single line of lyrics, associated with the chords to be performed.

A main view may refer to a primary area of the display 110 showing the part of the music the user is currently performing. A target view may refer to an auxiliary area of the user interface that shows the end point of a jump in score. A target view may be shown and hidden contextually and can be activated (selected) by the user to navigate the main view to the corresponding part.

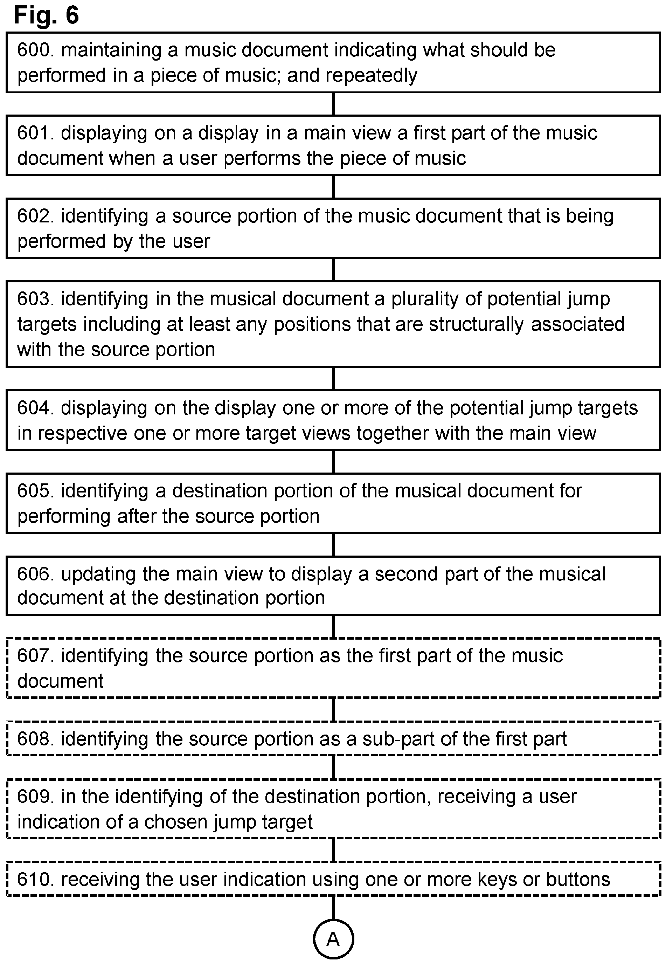

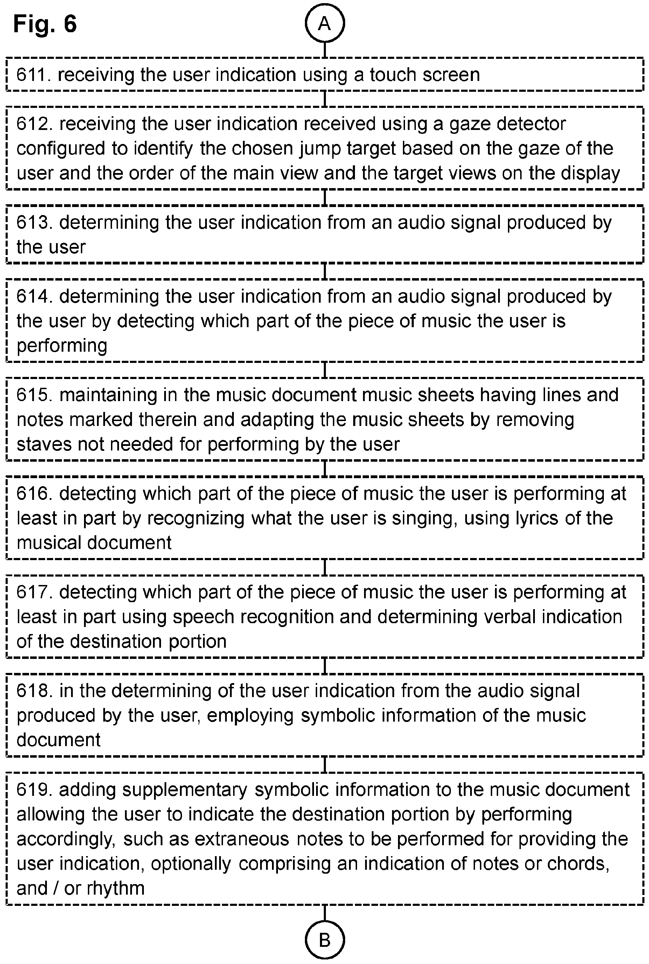

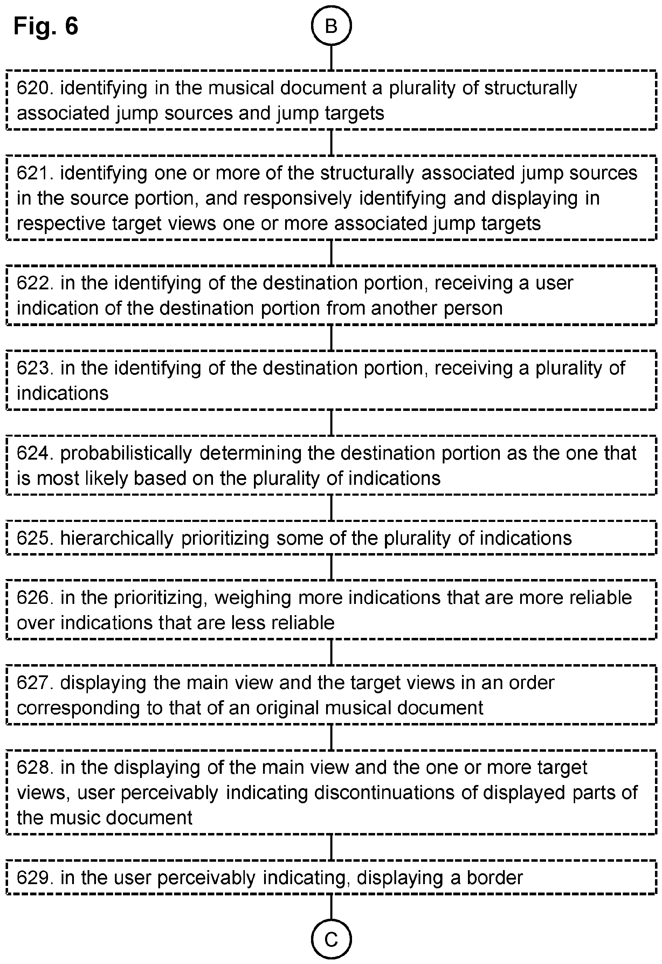

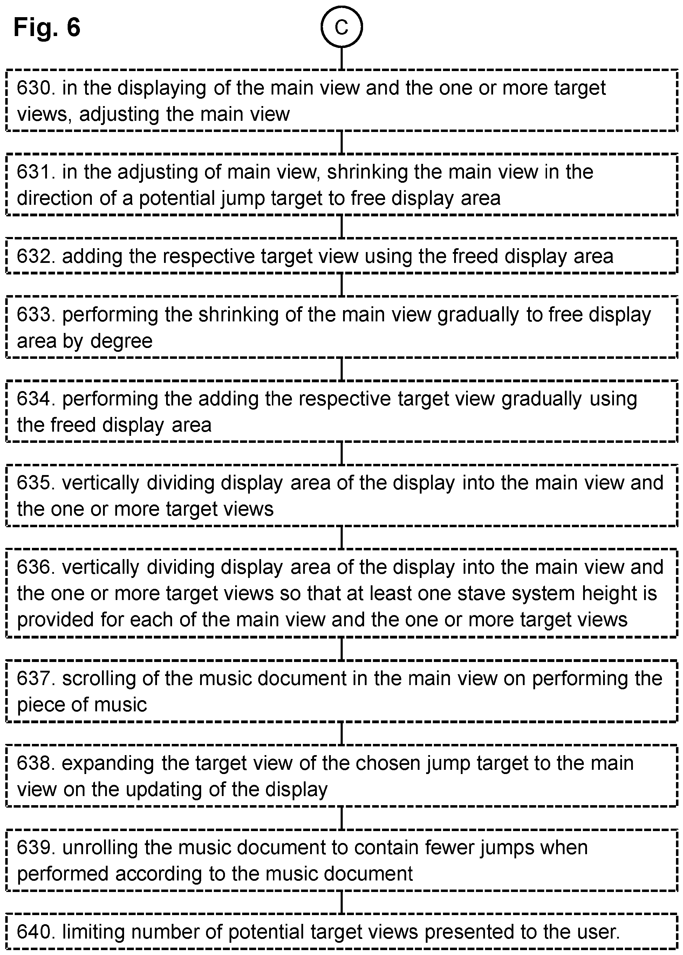

Figs. 6a to 6d show a flow chart according to an example embodiment. Fig. 6 illustrates a process comprising various possible steps including some optional steps while also further steps can be included and/or some of the steps can be performed more than once:
- 600.: maintaining a music document indicating what should be performed in a piece of music; and repeatedly;
- 601.: displaying on a display in a main view a first part of the music document when a user performs the piece of music;
- 602.: identifying a source portion of the music document that is being performed by the user;
- 603.: identifying in the musical document a plurality of potential jump targets including at least any positions that are structurally associated with the source portion;
- 604.: displaying on the display one or more of the potential jump targets in respective one or more target views together with the main view;
- 605.: identifying a destination portion of the musical document for performing after the source portion; and
- 606.: updating the main view to display a second part of the musical document at the destination portion.

The process may be entirely or partially automatic.

The process may further comprise any one or more of further options:
- 607.: identifying the source portion as the first part of the music document;
- 608.: identifying the source portion as a sub-part of the first part;
- 609.: in the identifying of the destination portion, receiving a user indication of a chosen jump target;
- 610.: receiving the user indication using one or more keys or buttons;
- 611.: receiving the user indication using a touch screen;
- 612.: receiving the user indication received using a gaze detector configured to identify the chosen jump target based on the gaze of the user and the order of the main view and the target views on the display;
- 613.: determining the user indication from an audio signal produced by the user;
- 614.: determining the user indication from an audio signal produced by the user by detecting which part of the piece of music the user is performing;
- 615.: maintaining in the music document music sheets having lines and notes marked therein and adapting the music sheets by removing staves not needed for performing by the user;
- 616.: detecting which part of the piece of music the user is performing at least in part by recognizing what the user is singing, using lyrics of the musical document;
- 617.: detecting which part of the piece of music the user is performing at least in part using speech recognition and determining verbal indication of the destination portion;
- 618.: in the determining of the user indication from the audio signal produced by the user, employing symbolic information of the music document, which symbolic information describes the piece of music, wherein the symbolic information may comprise an indication of notes or chords, and / or an indication of rhythm;
- 619.: adding supplementary symbolic information to the music document allowing the user to indicate the destination portion by performing accordingly, such as extraneous notes to be performed for providing the user indication, optionally comprising an indication of notes or chords, and / or rhythm, wherein the supplementary symbolic information may be made unique within the music document, such as given otherwise unused notes, chords, or sequences of notes or chords;
- 620.: identifying in the musical document a plurality of structurally associated jump sources and jump targets;
- 621.: identifying one or more of the structurally associated jump sources in the source portion, and responsively identifying and displaying in respective target views one or more associated jump targets;
- 622.: in the identifying of the destination portion, receiving a user indication of the destination portion from another person, such as a leader of a band or orchestra;
- 623.: in the identifying of the destination portion, receiving a plurality of indications;
- 624.: probabilistically determining the destination portion as the one that is most likely based on the plurality of indications;
- 625.: hierarchically prioritizing some of the plurality of indications;
- 626.: in the prioritizing, weighing more indications that are more reliable over indications that are less reliable, wherein the determination of reliability optionally is predetermined or assessed on forming one or more of the plurality of indications;
- 627.: displaying the main view and the target views in an order corresponding to that of an original musical document;
- 628.: in the displaying of the main view and the one or more target views, user perceivably indicating discontinuations of displayed parts of the music document;
- 629.: in the user perceivably indicating, displaying a border;
- 630.: in the displaying of the main view and the one or more target views, adjusting the main view;
- 631.: in the adjusting of main view, shrinking the main view in the direction of a potential jump target to free display area;
- 632.: adding the respective target view using the freed display area;
- 633.: performing the shrinking of the main view gradually to free display area by degree;
- 634.: performing the adding the respective target view gradually using the freed display area;
- 635.: vertically dividing display area of the display into the main view and the one or more target views;
- 636.: vertically dividing display area of the display into the main view and the one or more target views so that at least one stave system height is provided for each of the main view and the one or more target views;
- 637.: scrolling of the music document in the main view on performing the piece of music
- 638.: expanding the target view of the chosen jump target to the main view on the updating of the display;
- 639.: unrolling the music document to contain fewer jumps when performed according to the music document;
- 640.: limiting number of potential target views presented to the user.

Any of the afore described methods, method steps, or combinations thereof, may be controlled or performed using hardware; software; firmware; or any combination thereof. The software and/or hardware may be local; distributed; centralized; virtualized; or any combination thereof. Moreover, any form of computing, including computational intelligence, may be used for controlling or performing any of the afore described methods, method steps, or combinations thereof. Computational intelligence may refer to, for example, any of artificial intelligence; neural networks; fuzzy logics; machine learning; genetic algorithms; evolutionary computation; or any combination thereof.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method comprising
maintaining (600) a music document indicating what should be performed in a piece of music; and repeatedly:
displaying (601) on a display in a main view a first part of the music document when a user performs the piece of music;
identifying (602) a source portion of the music document that is being performed by the user;
identifying (603) in the musical document a plurality of potential jump targets including at least any positions that are structurally associated with the source portion;
displaying (604) on the display one or more of the potential jump targets in respective one or more target views together with the main view;
identifying (605) a destination portion of the musical document for performing after the source portion; and
updating (606) the main view to display a second part of the musical document at the destination portion.

2. The method of claim 1, further comprising in the identifying of the destination portion, receiving (609) a user indication of a chosen jump target from the user or another person.

3. The method of claim 2, further comprising receiving (612) the user indication using a gaze detection and positions of the main view and the target views on the display.

4. The method of claim 2, further comprising receiving (613) the user indication using an audio signal produced by the user.

5. The method of claim 4, the identifying (614) of the destination portion comprising detecting which part of the piece of music the user is performing.

6. The method of any one of claims 2 to 5, the identifying of the destination portion comprising recognizing (616) what the user is performing by singing, using lyrics of the musical document.

7. The method of claim 4, the identifying of the destination portion comprising using speech recognition and determining verbal indication of the destination portion (617).

8. The method of any one of claims 4 to 7, the identifying of the destination portion comprising using (618) symbolic information of the music document, which symbolic information describes the piece of music.

9. The method of claim 8, further comprising adding (619) supplementary symbolic information to the music document allowing the user to indicate the destination portion by performing accordingly.

10. The method of any one of preceding claims, wherein the source portion is the first part of the music document or a sub-part of the first part.

11. The method of any one of preceding claims, further comprising
identifying (620) in the musical document a plurality of structurally associated jump sources and jump targets; and
identifying (621) one or more of the structurally associated jump sources in the source portion, and responsively identifying and displaying in respective target views one or more associated jump targets.

12. The method of any one of preceding claims, further comprising in the identifying of the destination portion, receiving (623) a plurality of indications, and probabilistically determining (624) the destination portion as the one that is most likely based on the plurality of indications.

13. The method of claim 12, further comprising hierarchically prioritizing some of the plurality of indications.

14. The method of any one of preceding claims, further comprising displaying (627) the main view and the target views in an order corresponding to that of an original musical document.

15. An apparatus comprising means for performing the method of any one of preceding claims.
